# EUROPÄISCHE PATENTANMELDUNG

(11) **EP 4 425 745 A1**
(43) Veröffentlichungstag der Anmeldung: **04.09.2024**
(21) Anmeldenummer: 24159238.5
(22) Anmeldetag: 22.02.2024
(51) Int. Cl.: H02J 7/34

(54) **VERFAHREN ZUR ELEKTRISCHEN ENERGIEVERSORGUNG EINER GALVANISCHEN ANLAGE**

(30) Priorität: 27.02.2023 DE 102023104780
(71) Anmelder: Trivalent Oberflächentechnik GmbH, 74363 Güglingen-Frauenzimmern (DE)
(72) Erfinder: Wein, Michael, 74363 Güglingen (DE)
(74) Vertreter: Frey, Sven Holger

(57) **Zusammenfassung**

Die Erfindung betrifft ein Verfahren zur elektrischen Energieversorgung einer galvanischen Anlage (2), welche wenigstens einen elektrischen Verbraucher (2a) aufweist und auf welcher wenigstens ein galvanischer Prozess abläuft, umfassend wenigstens folgende Verfahrensschritte:
a) Erzeugen von Gleichstrom mittels wenigstens einer Stromerzeugungseinheit (4a,4b);
b) Laden wenigstens eines wiederaufladbaren elektrischen Energiespeichers (5) mit dem von der wenigstens einen Stromerzeugungseinheit (4a,4b) erzeugten Gleichstrom;
c) Entnehmen des geladenen Gleichstroms aus dem wenigstens einen elektrischen Energiespeicher (5) und Leiten des entnommenen Gleichstroms an einen Gleichspannungswandler (6); und
e) Versorgen des wenigstens einen Verbrauchers (2a) der galvanischen Anlage (2) mit dem von dem Gleichspannungswandler (6) modifizierten entnommenen Gleichstrom.

## Beschreibung

Die Erfindung betrifft ein Verfahren zur elektrischen Energieversorgung einer galvanischen Anlage.

Es ist bekannt, dass Galvanikanlagen bzw. galvanische Bäder Gleichstrom für ihren Betrieb benötigen. Hierzu wird in der Regel ein vorhandener Wechselstrom mittels eines Gleichrichters in Gleichstrom umgewandelt. Der so erhaltene Gleichstrom wird im Anschluss beispielsweise mittels eines Stelltransformators entsprechend umgewandelt. Die für den Folgeprozess benötigte Elektrolyse wird durch die gewünschte Spannung und Stromstärke geregelt. Zudem werden in der Galvanik häufig Blockheizkraftwerke (BHKW) eingesetzt, welche Wechselstrom erzeugen, der synchronisiert und in das vorhandene Stromnetz eingespeist wird. Die daraus gewonnene Wärme wird direkt oder mittels Wärmetauscher genutzt, um die Prozesswärme der galvanischen Prozesse zu steuern. Durch das häufige Umwandeln des Stroms geht aufgrund des begrenzten Wirkungsgrades der verwendeten Bauteile sehr viel Energie verloren.

Da der Stromverbrauch im Betrieb mitunter sehr hoch ist und ein starker Anstieg der Energiepreise zu beobachten ist, besteht der Wunsch zumindest einen Teil der Energieversorgung mit eigenen Mitteln bestreiten zu können. In der Regel wird nachts weniger Energie benötigt als tagsüber.

In der DE 618 062 A ist ein Verfahren zum Betrieb galvanischer Bäder beschrieben.

Der vorliegenden Erfindung liegt die Aufgabe zu Grunde, ein Verfahren der eingangs erwähnten Art zu verbessern, insbesondere effizienter und zuverlässiger zu gestalten und Energieverluste zu minimieren.

Diese Aufgabe wird erfindungsgemäß durch ein Verfahren mit den in Anspruch 1 genannten Merkmalen gelöst.

Erfindungsgemäß wird ein Verfahren zur elektrischen Energieversorgung einer galvanischen Anlage vorgeschlagen, welche wenigstens einen elektrischen Verbraucher aufweist und auf welcher wenigstens ein galvanischer Prozess, insbesondere eine elektrolytische Metallabscheidung abläuft, umfassend wenigstens folgende Verfahrensschritte:
a) Erzeugen von Gleichstrom mittels wenigstens einer Stromerzeugungseinheit;
b) Laden bzw. Aufladen wenigstens eines wiederaufladbaren elektrischen Energiespeichers mit dem von der wenigstens einen Stromerzeugungseinheit erzeugten Gleichstrom;
c) Entnehmen des geladenen Gleichstroms aus dem wenigstens einen elektrischen Energiespeicher und Leiten des entnommenen Gleichstroms an einen Gleichspannungswandler; und
e) Versorgen des wenigstens einen Verbrauchers der galvanischen Anlage mit dem von dem Gleichspannungswandler modifizierten entnommenen Gleichstrom.

Durch diese Maßnahmen wird eine sehr effiziente Energieversorgung von galvanischen Anlagen geschaffen. Verlustreiche Umwandlungen des erzeugten Stroms werden weitestgehend vermieden. Der erzeugte Strom kann in dem Energiespeicher vorgehalten und bei Bedarf entnommen werden.

Als die wenigstens eine Stromerzeugungseinheit kann ein Gleichstromgenerator, ein Blockheizkraftwerk, eine Photovoltaikanlage und/oder eine Brennstoffzelle verwendet werden.

Somit können neben konventionellen Energiequellen auch regenerative Energiequellen bei der Energieversorgung zum Einsatz kommen.

Als der wenigstens eine elektrische Energiespeicher kann eine Batterie, insbesondere eine Redox-Flow-Batterie oder ein Lithium-Eisenphosphat-Akkumulator verwendet werden.

Die Redox-Flow-Batterie (RFB) oder (Redox-)Flussbatterie - allgemeiner auch Flüssigbatterie oder Nasszelle genannt - stellt eine Ausführungsform eines Akkumulators dar. Sie speichert elektrische Energie in chemischen Verbindungen, wobei die Reaktionspartner in einem Lösungsmittel in gelöster Form vorliegen. Die zwei energiespeichernden Elektrolyte zirkulieren dabei in zwei getrennten Kreisläufen, zwischen denen in der galvanischen Zelle mittels einer Membran der lonenaustausch erfolgt. In der Zelle werden dabei die gelösten Stoffe chemisch reduziert bzw. oxidiert, wobei elektrische Energie frei wird. Die Redox-Flow-Zelle kann je nach Baugröße und Typ Leistungen von einigen 100 Watt bis zu mehreren Megawatt bereitstellen und hat einen Wirkungsgrad im Bereich von 75 bis 80 Prozent. Zudem hat das System eine geringe Selbstentladung und eine hohe Standzeit. Die Entsorgung einer derartigen Batterie ist unkritisch, da im Wesentlichen nur Salz und eine Membran vorhanden sind. Entstehendes Abwasser kann in galvanischen Betrieben zumeist sehr leicht entsorgt werden.

Alternativ oder zusätzlich kann auch ein Lithium-Eisenphosphat-Akkumulator verwendet werden, wodurch die Sicherheit der Speicherung verbessert werden kann.

Als Gleichspannungswandler kann ein Stelltransformator oder ein Schaltnetzteil verwendet werden.

Die in Verfahrensschritt a) von der Stromerzeugungseinheit beim Erzeugen des Gleichstroms freigesetzte thermische Energie kann der galvanischen Anlage zugeführt oder zum Heizen, insbesondere einer Umgebung der galvanischen Anlage verwendet werden.

Durch diese Maßnahmen kann die Verlustwärme, welche bei der Stromerzeugung entsteht, in vorteilhafter Weise zum Beheizen der galvanischen Anlage genutzt werden. Dadurch kann ein sehr hoher Gesamtwirkungsgrad erzielt werden.

Der den elektrischen Energiespeicher ladende Gleichstrom kann eine Spannung von 48 Volt aufweisen.

In Anspruch 7 ist eine Anordnung angegeben, wenigstens bestehend aus:
- einer galvanischen Anlage, welche wenigstens einen elektrischen Verbraucher aufweist und auf welcher wenigstens ein galvanischer Prozess, insbesondere eine elektrolytische Metallabscheidung ablaufen kann; und
- einem insbesondere gleichstromgekoppelten Energiemanagementsystem, welches dazu eingerichtet ist, die galvanische Anlage mittels des erfindungsgemäßen Verfahrens mit elektrischer Energie zu versorgen und welches wenigstens umfasst:
   - wenigstens eine Stromerzeugungseinheit;
   - wenigstens einen wiederaufladbaren elektrischen Energiespeicher, welcher mit der wenigstens einen Stromerzeugungseinheit elektrisch verbunden ist und über diese geladen werden kann;
- einen Gleichspannungswandler, welcher einerseits mit dem wenigstens einen elektrischen Energiespeicher und andererseits mit dem wenigstens einen Verbraucher der galvanischen Anlage elektrisch verbunden ist und dazu eingerichtet ist, mit einem von dem wenigstens einen elektrischen Energiespeicher erhaltenen Gleichstrom, insbesondere modifiziert den wenigstens einen Verbraucher der galvanischen Anlage zu versorgen; und
- eine Steuerungseinrichtung, welche wenigstens mit dem elektrischen Energiespeicher und dem Gleichspannungswandler kommunikationsverbunden und/oder elektrisch verbunden ist, und welche dazu eingerichtet ist, den wenigstens einen elektrischen Energiespeicher und den Gleichspannungswandler derart anzusteuern oder zu regeln, dass die Spannung des Gleichstroms, mit welchem der wenigstens eine Verbraucher der galvanischen Anlage versorgt wird, insbesondere in Abhängigkeit von Betriebs- und/oder Umgebungsbedingungen variabel einstellbar ist.

Das Energiemanagementsystem kann ferner wenigstens eine Sensoreinheit umfassen, welche mit der Steuerungseinrichtung kommunikationsverbunden und/oder elektrisch verbunden ist und welche dazu ausgelegt ist, eine elektrische Bilanz von an das Energiemanagementsystem angeschlossenen elektrischen Verbrauchern der galvanischen Anlage zu messen.

Die Steuereinrichtung dazu eingerichtet sein, eine Effizienz zwischen einem Wirkungsgrad und der Stromversorgung zu bestimmen.

Der wenigstens eine galvanische Prozess kann ein Entfetten, ein Eloxieren, ein elektrochemisches Verfahren, insbesondere eine elektrolytische Metallabscheidung, oder ein stromloses chemisches Verfahren umfassen.

Vorteilhafte Ausgestaltungen und Weiterbildungen der Erfindung sind in den Unteransprüchen angegeben.

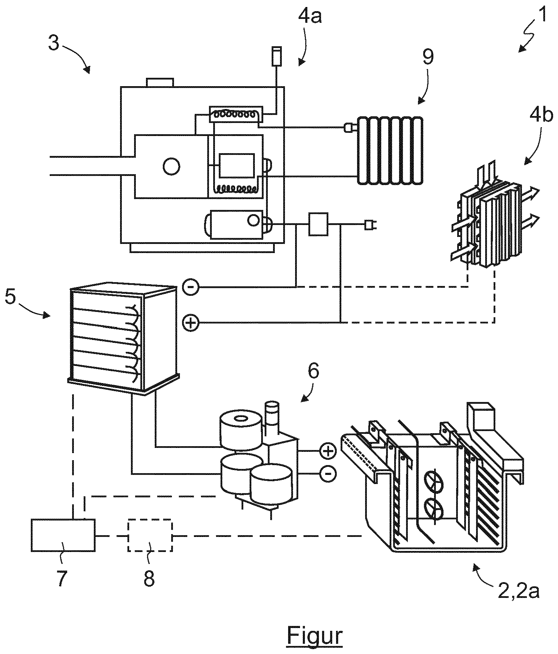

Nachfolgend wird die Erfindung anhand der Zeichnung näher erläutert.

Die einzige Figur der Zeichnung zeigt eine schematische Darstellung zur Verdeutlichung eines erfindungsgemäßen Verfahrens.

In der Figur ist eine Anordnung 1 dargestellt, bestehend aus:
- einer galvanischen Anlage 2, welche wenigstens einen elektrischen Verbraucher 2a aufweist und auf welcher wenigstens ein galvanischer Prozess, insbesondere eine elektrolytische Metallabscheidung ablaufen kann; und
- einem gleichstromgekoppelten Energiemanagementsystem 3, welches dazu eingerichtet ist, die galvanische Anlage 2 mittels eines erfindungsgemäßen Verfahrens mit elektrischer Energie zu versorgen und welches wenigstens umfasst:
   - wenigstens eine Stromerzeugungseinheit 4a, 4b;
   - wenigstens einen wiederaufladbaren elektrischen Energiespeicher 5, welcher mit der wenigstens einen Stromerzeugungseinheit 4a, 4b elektrisch verbunden ist und über diese geladen werden kann;
- einen Gleichspannungswandler 6, welcher einerseits mit dem wenigstens einen elektrischen Energiespeicher 5 und andererseits mit dem wenigstens einen Verbraucher 2a der galvanischen Anlage 2 elektrisch verbunden ist und dazu eingerichtet ist, mit einem von dem wenigstens einen elektrischen Energiespeicher 5 erhaltenen Gleichstrom, insbesondere modifiziert den wenigstens einen Verbraucher 2a der galvanischen Anlage 2 zu versorgen; und
- eine Steuerungseinrichtung 7, welche wenigstens mit dem elektrischen Energiespeicher 5 und dem Gleichspannungswandler 6 kommunikationsverbunden und/oder elektrisch verbunden ist, und welche dazu eingerichtet ist, den wenigstens einen elektrischen Energiespeicher 5 und den Gleichspannungswandler 6 derart anzusteuern oder zu regeln, dass die Spannung des Gleichstroms, mit welchem der wenigstens eine Verbraucher 2a der galvanischen Anlage 2 versorgt wird, insbesondere in Abhängigkeit von Betriebs- und/oder Umgebungsbedingungen variabel einstellbar ist.

Das Energiemanagementsystem 3 kann ferner eine gestrichelt angedeutete Sensoreinheit 8 umfassen, welche mit der Steuerungseinrichtung 7 kommunikationsverbunden und/oder elektrisch verbunden ist und welche dazu ausgelegt ist, eine elektrische Bilanz von an das Energiemanagementsystem 3 angeschlossenen elektrischen Verbrauchern 2a der galvanischen Anlage 2 zu messen.

Das erfindungsgemäße Verfahren zur elektrischen Energieversorgung der galvanischen Anlage 2, welche den wenigstens einen elektrischen Verbraucher 2a aufweist und auf welcher wenigstens ein galvanischer Prozess, insbesondere eine elektrolytische Metallabscheidung abläuft, umfasst wenigstens folgende Verfahrensschritte:
a) Erzeugen von Gleichstrom mittels der wenigstens einen Stromerzeugungseinheit 4a, 4b;
b) Laden bzw. Aufladen des wenigstens einen wiederaufladbaren elektrischen Energiespeichers 5 mit dem von der wenigstens einen Stromerzeugungseinheit 4a, 4b erzeugten Gleichstrom;
c) Entnehmen des geladenen Gleichstroms aus dem wenigstens einen elektrischen Energiespeicher 5 und Leiten des entnommenen Gleichstroms an den Gleichspannungswandler 6; und
e) Versorgen des wenigstens einen Verbrauchers 2a der galvanischen Anlage 2 mit dem von dem Gleichspannungswandler 6 modifizierten entnommenen Gleichstrom.

Wie aus der Figur ersichtlich kann als die wenigstens eine Stromerzeugungseinheit ein Blockheizkraftwerk 4a und/oder eine Brennstoffzelle 4b verwendet werden.

Alternativ oder zusätzlich könnten in einem nicht dargestellten Ausführungsbeispiel als die wenigstens eine Stromerzeugungseinheit beispielsweise auch ein sonstiger Gleichstromgenerator und/oder eine Photovoltaikanlage verwendet werden.

Als der wenigstens eine elektrische Energiespeicher 5 kann eine Batterie, insbesondere eine Redox-Flow-Batterie oder ein Lithium-Eisenphosphat-Akkumulator verwendet werden.

Als Gleichspannungswandler 6 kann ein Stelltransformator oder ein Schaltnetzteil verwendet werden.

Die in Verfahrensschritt a) von der Stromerzeugungseinheit 4a, 4b beim Erzeugen des Gleichstroms freigesetzte thermische Energie kann der galvanischen Anlage 2 zugeführt oder zum Heizen, insbesondere einer Umgebung der galvanischen Anlage verwendet werden (in der Figur stark vereinfacht durch einen Heizkörper 9 angedeutet).

Der den elektrischen Energiespeicher 5 ladende Gleichstrom kann eine Spannung von 48 Volt aufweisen.

Der wenigstens eine galvanische Prozess kann ein Entfetten, ein Eloxieren, ein elektrochemisches Verfahren, insbesondere eine elektrolytische Metallabscheidung, oder ein stromloses chemisches Verfahren, wie beispielsweise eine Chemisch-Nickel-Beschichtung, umfassen.

### Bezugszeichenliste

- 1: Anordnung
- 2: galvanische Anlage
- 2a: elektrischer Verbraucher
- 3: gleichstromgekoppeltes Energiemanagementsystem
- 4a: Blockheizkraftwerk
- 4b: Brennstoffzelle
- 5: elektrischer Energiespeicher
- 6: Gleichspannungswandler
- 7: Steuerungseinrichtung
- 8: Sensoreinheit
- 9: Heizkörper

## Patentansprüche

1. Verfahren zur elektrischen Energieversorgung einer galvanischen Anlage (2), welche wenigstens einen elektrischen Verbraucher (2a) aufweist und auf welcher wenigstens ein galvanischer Prozess abläuft, umfassend wenigstens folgende Verfahrensschritte:
a) Erzeugen von Gleichstrom mittels wenigstens einer Stromerzeugungseinheit (4a,4b);
b) Laden wenigstens eines wiederaufladbaren elektrischen Energiespeichers (5) mit dem von der wenigstens einen Stromerzeugungseinheit (4a,4b) erzeugten Gleichstrom;
c) Entnehmen des geladenen Gleichstroms aus dem wenigstens einen elektrischen Energiespeicher (5) und Leiten des entnommenen Gleichstroms an einen Gleichspannungswandler (6); und
e) Versorgen des wenigstens einen Verbrauchers (2a) der galvanischen Anlage (2) mit dem von dem Gleichspannungswandler (6) modifizierten entnommenen Gleichstrom.

2. Verfahren nach Anspruch 1, wobei als die wenigstens eine Stromerzeugungseinheit ein Gleichstromgenerator, ein Blockheizkraftwerk (4a), eine Photovoltaikanlage und/oder eine Brennstoffzelle (4b) verwendet wird.

3. Verfahren nach Anspruch 1 oder 2, wobei als der wenigstens eine elektrische Energiespeicher (5) eine Batterie, insbesondere eine Redox-Flow-Batterie oder ein Lithium-Eisenphosphat-Akkumulator verwendet wird.

4. Verfahren nach Anspruch 1, 2 oder 3, wobei als Gleichspannungswandler (6) ein Stelltransformator oder ein Schaltnetzteil verwendet wird.

5. Verfahren nach einem der Ansprüche 1 bis 4, wobei die in Verfahrensschritt a) von der Stromerzeugungseinheit (4a,4b) beim Erzeugen des Gleichstroms freigesetzte thermische Energie der galvanischen Anlage (2) zugeführt oder zum Heizen, insbesondere einer Umgebung der galvanischen Anlage (2) verwendet wird.

6. Verfahren nach einem der Ansprüche 1 bis 5, wobei der den elektrischen Energiespeicher (5) ladende Gleichstrom eine Spannung von 48 Volt aufweist.

7. Anordnung (1), wenigstens bestehend aus:
- einer galvanischen Anlage (2), welche wenigstens einen elektrischen Verbraucher (2a) aufweist und auf welcher wenigstens ein galvanischer Prozess ablaufen kann; und
- einem gleichstromgekoppelten Energiemanagementsystem (3), welches dazu eingerichtet ist, die galvanische Anlage (2) mittels eines Verfahrens nach einem der Ansprüche 1 bis 6 mit elektrischer Energie zu versorgen und welches wenigstens umfasst:
- wenigstens eine Stromerzeugungseinheit (4a,4b);
- wenigstens einen wiederaufladbaren elektrischen Energiespeicher (5), welcher mit der wenigstens einen Stromerzeugungseinheit (4a,4b) elektrisch verbunden ist und über diese geladen werden kann;
- einen Gleichspannungswandler (6), welcher einerseits mit dem wenigstens einen elektrischen Energiespeicher (5) und andererseits mit dem wenigstens einen Verbraucher (2a) der galvanischen Anlage (2) elektrisch verbunden ist und dazu eingerichtet ist, mit einem von dem wenigstens einen elektrischen Energiespeicher (5) erhaltenen Gleichstrom, insbesondere modifiziert den wenigstens einen Verbraucher (2a) der galvanischen Anlage (2) zu versorgen; und
- eine Steuerungseinrichtung (7), welche wenigstens mit dem elektrischen Energiespeicher (5) und dem Gleichspannungswandler (6) kommunikationsverbunden und/oder elektrisch verbunden ist, und welche dazu eingerichtet ist, den wenigstens einen elektrischen Energiespeicher (5) und den Gleichspannungswandler (6) derart anzusteuern oder zu regeln, dass die Spannung des Gleichstroms, mit welchem der wenigstens eine Verbraucher (2a) der galvanischen Anlage (2) versorgt wird, insbesondere in Abhängigkeit von Betriebs- und/oder Umgebungsbedingungen variabel einstellbar ist.

8. Anordnung (1) nach Anspruch 7, wobei das Energiemanagementsystem (3) ferner wenigstens eine Sensoreinheit (8) umfasst, welche mit der Steuerungseinrichtung (7) kommunikationsverbunden und/oder elektrisch verbunden ist und welche dazu ausgelegt ist, eine elektrische Bilanz von an das Energiemanagementsystem (3) angeschlossenen elektrischen Verbrauchern (2a) der galvanischen Anlage (2) zu messen.

9. Verfahren nach einem der Ansprüche 1 bis 6 oder Anordnung (1) nach Anspruch 7 oder 8, wobei der wenigstens eine galvanische Prozess ein Entfetten, ein Eloxieren, ein elektrochemisches Verfahren, insbesondere eine elektrolytische Metallabscheidung, oder ein stromloses chemisches Verfahren umfasst.
